Europäisches Patentamt

European Patent Office

Office européen des brevets

(11) Publication number: **0 145 539**
**B1**

(12) **EUROPEAN PATENT SPECIFICATION**

(45) Date of publication of patent specification: **10.01.90**

(51) Int. Cl.[5]: **B 01 J 20/20, C 01 B 31/08, B 01 D 53/34**

(21) Application number: **84402205.3**

(22) Date of filing: **02.11.84**

(54) Mercury adsorbent carbons and carbon molecular sieves.

(30) Priority: **03.11.83 US 548471**
**03.11.83 US 548472**

(43) Date of publication of application:
**19.06.85 Bulletin 85/25**

(45) Publication of the grant of the patent:
**10.01.90 Bulletin 90/02**

(84) Designated Contracting States:
**DE FR GB NL**

(56) References cited:
**DE-A-2 150 592**
**FR-A-1 191 220**
**US-A-3 194 629**
**US-A-3 374 608**
**US-A-3 884 830**
**US-A-4 101 631**

(73) Proprietor: **CALGON CARBON CORPORATION**
**400 Media Drive**
**Robinson Township Pennsylvania 15205 (US)**

(72) Inventor: **Matviya, Thomas M.**
**1000 Westpointe Drive, Apt. 119**
**Pittsburgh Pennsylvania 15205 (US)**
Inventor: **Gebhard, Robert S.**
**48 Greenbriar Drive**
**Pittsburgh Pennsylvania 15220 (US)**
Inventor: **Greenbank, Michael**
**5010 Park Lane**
**Monaca Pennsylvania 15061 (US)**

(74) Representative: **Warcoin, Jacques et al**
**Cabinet Régimbeau 26, avenue Kléber**
**F-75116 Paris (FR)**

Courier Press, Leamington Spa, England.

EP 0 145 539 B1

**Description**

Background of the invention

Mercury vapor has been removed from gas streams by a number of different adsorbents. See for example, U.S. Patent 3,194,629 describing activated carbon impregnated with potassium triiodine or sulfur; U.S. Patent 3,876,393 describing activated carbon impregnated with sulfuric acid; U.S. Patent 3,193,987 describing activated carbon impregnated with silver or copper salts; and U.S. Patent 4,101,631 describing zeolites containing elemental sulfur. Generally, these adsorbents are only effective when relatively large concentrations of mercury are present and, each adsorbent has a lower limit, below which, mercury vapor is either inefficiently adsorbed or not adsorbed at all.

It has been discovered that nut shell carbons and carbon molecular sieves impregnated with sulfur are effective adsorbents especially of very low concentrations of mercury vapor. It was also found that nut shell carbons and carbon molecular sieves impregnated with sulfur are less adversely affected by water and by temperature than the prior art adsorbents.

Description of the invention

The instant invention is directed to a nut shell carbon and a carbon molecular sieve characterized in that it has a nitrogen diffusivity in the range from 1 to $2600 \cdot 10^{-8}$ cm$^2$/second and which is impregnated with from about 0.005 to about 15 percent, by weight, of sulfur, preferable 0.01 to 10, most preferable 3 to 7, percent, by weight, of a mercury reactive material.

The instant invention is also directed to a process for removing mercury vapor from gas streams comprising passing a gas stream containing mercury vapor into contact with a nut shell carbon impregnated with from about 0.005 to about 15 percent, by weight, of sulfur, and to a process for removing mercury vapor from gas streams which comprises passing a gas stream containing mercury vapor into contact with a carbon molecular sieve, having a nitrogen diffusivity of less than $2600 \times 10^{-8}$ cm$^2$/second, impregnated with from about 0.005 to about 15 percent, by weight, of a mercury reactive material.

Nut shell carbons, impregnated with from 0.005 to 15 weight percent, preferably at least 0.01 weight percent, most preferably at least 3 weight percent of sulfur are useful adsorbents for removing mercury vapor from gas streams, especially at low level mercury vapor concentrations. The carbons are especially effective at mercury vapor concentrations, P, at a given pressure and temperature, defined as $P<(4\times10^{-6})\times P_s$, preferably $P<(1\times10^{-6})\times P_s$, where $P_s$ is the mercury vapor saturation pressure at the aforementioned given pressure and temperature. Likewise, carbon molecular sieves impregnated with from 0.005 to 15 weight percent, preferably 0.01 to 10 weight percent, most preferably from 3 to 7 weight percent of a mercury reactive material are useful adsorbents for removing mercury vapor from gas streams, especially at low level mercury vapor concentrations. The carbons are especially effective at mercury vapor concentrations, P, at a given pressure and temperature, defined as $P<(4\times10^{-6})\times P_s$, preferably $P<(1\times10^{-6})\times P_s$, where $P_s$ is the mercury vapor saturation pressure at the aforementioned given pressure and temperature.

Carbon molecular sieves are porous substrates with an open-network structure of controlled molecular dimension which may be used to separate mixtures of small molecules from larger molecules, based on a difference in molecular size or a difference in diffusivity rates. U.S. Patent 3,884,830, which is hereby incorporated by reference, describes the manufacture of an activated carbon molecular sieve.

Carbon molecular sieves have been prepared from a variety of substrates by a number of different manufacturing processes. Examples include anthracite coal (U.S. Patent 3,222,412); coke or coconut shells, elevated temperatures and pore blocking by carbon deposition (U.S. patent 3,801,513); vinylidene chloride copolymers (U.S. Patent 4,046,709); and bituminous coal or coconut shells, elevated temperatures and an inert atmosphere (U.S. Patent 2,556,859). The preferred substrates are coal and nut shells. Carbon molecular sieves may also be defined in the present invention as having a nitrogen diffusivity of less than $2600\times10^{-8}$ cm$^2$/second, preferably $1\times10^{-8}$ cm$^2$/second to $2600\times10^{-8}$ cm$^2$/second, more preferably $10\times10^{-8}$ cm$^2$/second to $2600\times10^{-8}$ cm$^2$/second, and most preferably $10\times10^{-8}$ cm$^2$/second to $300\times10^{-8}$ cm$^2$/second, prior to impregnation.

The removal of mercury vapor from the aforementioned gas streams with the impregnated nut shell carbons or with the impregnated carbon molecular sieves may be accomplished in any manner available to the skilled artisan. Generally, the gas stream is contacted with a quantity of the sulfur impregnated nut shell carbons or mercury reactive material impregnated carbon molecular sieves. This may be accomplished in one or more adsorbent beds, through which the mercury vapor laden gas is passed. There may also be employed additional mercury adsorbents, such as mercury reactive material containing zeolite and/or the carbon described in U.S. Patent 3,194,629. These adsorbents are commercially available from Union Carbide Corporation and Calgon Carbon Corporation respectively.

In preferred embodiments of the instant invention, the mercury-vapor-laden gas stream is brought into contact with an activated coal-based carbon or zeolite molecular sieve impregnated with a mercury reactive material and subsequently passing the mercury stream through the nut shell carbon or carbon molecular sieve impregnated with a mercury reactive material. Examples of the mercury reactive materials which may be used include oxidizing agents and amalgamating metals. Examples of oxidizing agents include: S;

$FeCl_3$; sulfides, such as $CuS$, $AgS$; $KI_3$; $KIO_3$; $NaOCl$; $MnO_2$ and $PbCl_2$. Examples of metals include: gold, silver, tin and copper.

Gas streams contemplated to come within the scope of this invention include: natural gas streams; industrial gas streams contaminated with mercury, such as hydrogen gas from a chlor-alkali plant, furnace stack gases, battery disposal incinerator gases and the like; hydrogen purification streams and the like; air, hydrocarbon gases, carbon dioxide, carbon monoxide, oxygen, nitrogen and the like.

Any nut shell char may be used, preferably coconut shell or babassu nut chars. The char may be activated or unactivated. An example of an activated coconut shell char commercially available includes GRC-II and of an unactivated coconut char (carbon molecular sieve), CMX-1, both manufactured by Calgon Carbon Corporation. Any nut shell char may be used in the present invention. The nut shell char is prepared merely by heating the shells at a temperature sufficient to char (i.e. carbonize) the shells. Reduced oxygen conditions are necessary to prevent complete burning. The charred shells are generally crushed and screened to the desired mesh size. Mesh size is not a critical factor. U.S. sieve sizes of from 3×6 to 50×100 may be employed. The char may, optionally, be activated by the presence of steam, carbon dioxide or oxidizing agents. Charring and activation are described in U.S. Patent 3,884,830, which is hereby incorporated by reference.

Any carbon molecular sieve may be used. Examples include CMX-1, GRC-II and MSC-V, manufactured by Calgon Carbon Corporation. CMX-1 is a non-activated carbon molecular sieve. GRC-II and MSC-V are slightly activated carbon molecular sieves.

The carbons or molecular sieves may be impregnated with sulfur in any convenient manner. For example, solid elemental sulfur and granular carbon may be admixed and heated at about 150°C. Additional heating at about 150°C or above for from 10 to 90 minutes causes complete impregnation of the sieve pores by the sulfur. Alternatively, the sulfur may be dissolved in a solvent such as carbon disulfide, and the solvent contacted with the carbon. Typical methods include spraying, dipping, and the like. Excess solution is removed by decanting or filtering and the sieve is dried. Drying may be accomplished at room temperature, or at elevated temperatures. Vacuum may also be employed to aid in removing solvent.

The carbons used in Examples 1 through 11 are described in Table I.

TABLE I

| Carbon | Hg Vapor removal limit ($\mu g/m^3$) 20—25°C ambient pressure |
|---|---|
| BPL[*a] | .071 |
| CMX-1[a] | .0016 |
| GRC-II[a] | .0018 |
| Babassu nut | .0040 |

* Comparison.
[a] Manufactured by Calgon Carbon Corporation.

Examples

Example 1

Preparation of CMX-1

Coconut char was fed to an enclosed drive-belt furnace at 30 pounds per hour. The furnace temperature was 1800°F and the furnace residence time was 30 minutes. A constant nitrogen purge, countercurrent to feed flow, was maintained at 25 standard cubic feet per minute (SCFM). The atmosphere was maintained at less than 500 ppm oxygen.

To calculate a test gas (e.g. oxygen, nitrogen, etc.) diffusivity value, the dead volume of a sample cell containing about 10 grams of carbon sieve was determined by helium expansion. The test gas was then expanded into the re-evacuated sample cell from a one-liter reference cell. Knowing the dead volume, adsorption (loading) of any test gas was monitored by the change in pressure of the system. These values combined with an eqilibrium loading value calculated for a sieve sample after one hour (at STP) allowed the determination of a relative loading value ($L_t/L_e$). $L_t$ was the test gas loading value of a sieve sample at a given time, for example 30 seconds, and $L_e$ was the test gas loading value of a sieve sample at equilibrium. The gas diffusivity value (D) of a sieve sample was then calculated for the test gas by solving the simplified equation for diffusion into a sphere:

$$L_t/L_e = 6 \ (Dt/\pi R_0^2)^{1/2} - 3Dt/R_0^2$$

where

D = gas diffusivity value
t = time in seconds
$R_0$ = mean particle radius of a carbon sieve (0.05125 cm).

See: R. L. Dedrick and R. B. Beckmann, "Kinetics of Adsorption by Activated Carbon from Dilute Aqueous Solution", *Physical Adsorption Processes and Principles*, L. N. Canjar and J. A. Kostecki, eds., Vol. 63, American Institute of Chemical Engineers, New York (1967); P. L. Walker, Jr., L. G. Austin and S. P. Nandi, "Activated Diffusion of Gases in Molecular Sieve Materials", *The Chemistry and Physics of Carbon*, P. L. Walker, Jr., ed., Vol. 2, Marcel Dekker, Inc., New York (1966) and J. Crank, "The Mathematics of Diffusion", 2nd Ed., Clarendon Press, Oxford (1975).

Determination of oxygen and nitrogen diffusivity values allowed for calculation of the oxygen/nitrogen selectivity ratio: $S = DO_2/DN_2$.

A carbon sieve having the following physical characteristics was produced:

| | |
|---|---|
| (A) Oxygen diffusivity $\times 10^{-8}$ cm/sec$^2$ | 693 |
| (B) Oxygen/nitrogen selectivity ratio | 7.19 |
| (C) Oxygen equilibrium volume STP gas cc/g carbon | 6.7 |
| (D) Oxygen equilibrium volume STP gas cc/cc bed volume carbon | 4.3 |
| (E) Apparent density g/cc | 0.64 |

Example 2

The carbon of Example 1 was mixed, at 150°C, with a sufficient quantity of sublimed elemental sulfur to provide a 5 percent (w/w) sulfur loading until the mixture was uniform. This mixture was then heated at 150°C for 90 minutes.

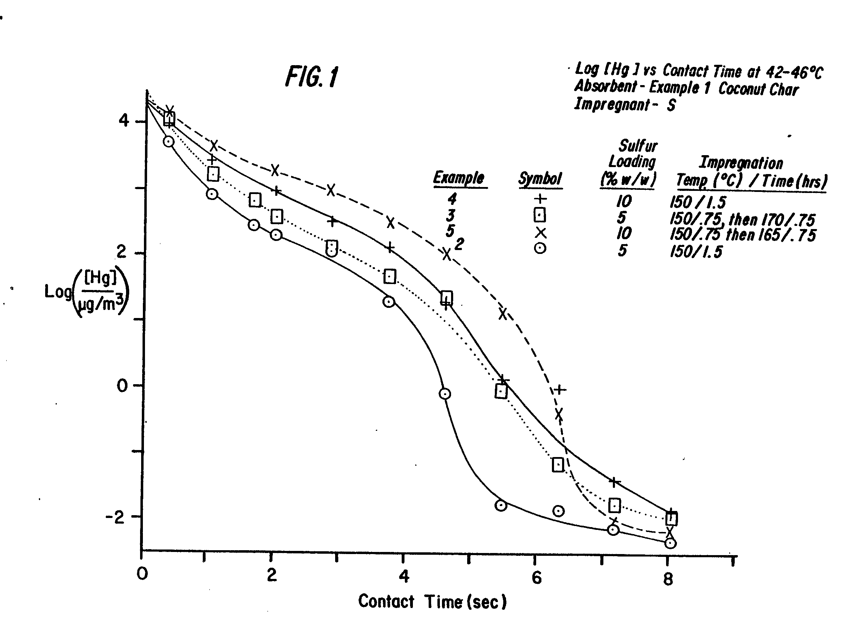

A dry air stream, having an inlet mercury concentration of 17,900 µg/m$^3$ was passed through a column containing the above-described sulfur impregnated CMX-1, at a linear velocity of 23 ft/min. The column and inlet air stream were maintained at a temperature of 42°C and ambient pressure. A contact time of 8 seconds was sufficient to reduce the mercury vapor concentration to .005 µg/m$^3$. The results are presented in Figure 1.

Example 3

The carbon of Example 1 was mixed, at 150°C, with a sufficient quantity of sublimed elemental sulfur to provide a 5 percent (w/w) sulfur loading until the mixture was uniform. This mixture was then heated at 150°C for 45 minutes and at 170°C for an additional 45 minutes.

A dry air stream, having an inlet mercury concentration of 30,800 µg/m$^3$ was passed through a column containing the above-described sulfur impregnated CMX-1, at a linear velocity of 23 ft/min. The column and inlet air stream were maintained at a temperature of 46°C and ambient pressure. A contact time of 8 seconds was sufficient to reduce the mercury vapor concentration to .012 µg/m$^3$. The results are presented in Figure 1.

Example 4

The carbon of Example 1 was mixed, at 150°C, with a sufficient quantity of sublimed elemental sulfur to provide a 10 percent (w/w) sulfur loading until the mixture was uniform. This mixture was then heated at 150°C for 90 minutes.

A dry air stream, having an inlet mercury concentration of 22,700 µg/m$^3$ was passed through a column containing the above-described sulfur impregnated CMX-1, at a linear velocity of 23 ft/min. The column and inlet air stream were maintained at a temperature of 44°C and ambient pressure. A contact time of 8 seconds was sufficient to reduce the mercury vapor concentration to .014 µg/m$^3$. The results are presented in Figure 1.

Example 5

The carbon of Example 1 was mixed, at 150°C, with a sufficient quantity of sublimed elemental sulfur to provide a 10 percent (w/w) sulfur loading until the mixture was uniform. This mixture was then heated at 150°C for 45 minutes and at 165°C for an additional 45 minutes.

A dry air stream, having an inlet mercury concentration of 21,200 µg/m$^3$ was passed through a column containing the sulfur impregnated coconut char, at a linear velocity of 23 ft/min. The column and inlet air stream were maintained at a temperature of 44°C and ambient pressure. A contact time of 8 seconds was sufficient to reduce the mercury vapor concentration to .008 µg/m$^3$. The results are presented in Figure 1.

Example 6

Dry air, having a high mercury vapor concenration, was passed through the carbon of Example 1 impregnated with sulfur (5 percent sulfur loading, impregnated at 150°C for 90 minutes heating time) at ambient pressure and temperatures of 20°C and 42°C. Ports situated along the length of the column were sampled to determine the mercury vapor concentration in the air after known contact times with the adsorbent. The linear flowrate of the air was 23 ft/min.

The above procedure was repeated at 18°C and 42°C with the sulfur impregnated carbon of Example 1 being replaced with Union Carbide 1/16 mole sieve (a sulfur impregnated zeolite mercury adsorbent).

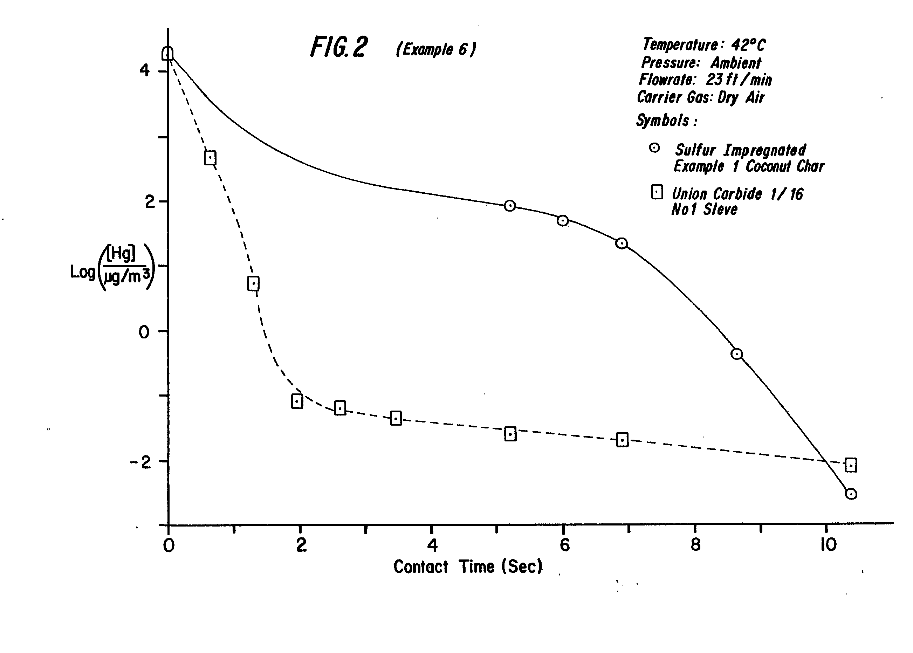

Results (Figure 2) obtained at 42°C show the mercury vapor removal limit of the sulfur impregnated zeolite (0.008 µg/m$^3$) to be inferior to that of the sulfur impregnated Example 1 carbon (.003 µg/m$^3$). It

should also be noted that the removal limit of the carbon molecular sieve does not appear to be highly dependent on the mercury partial pressure.

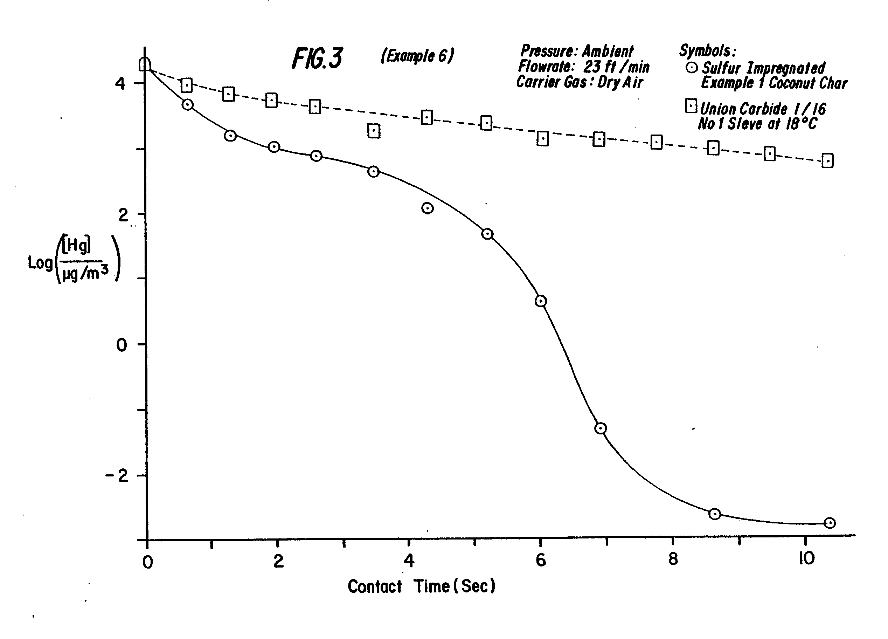

Results (Figure 3) obtained at lower temperatures (18 and 20°C) show the Union Carbide mole sieve (at 18°C) to be ineffective due to very poor mercury vapor removal kinetics. The sulfur impregnated coconut char has a mercury vapor removal limit of less than .002 µg/m$^3$ at a nearly equivalent temperature (20°C).

Example 7

Dry air, having a high mercury vapor concentration, was passed through a column containing the carbon of Example 1 impregnated with sulfur (5 percent sulfur loading, impregnated at 150°C, followed by heating at 150°C for 90 minutes) at a linear flowrate of 23 ft/min. Pressure and temperature were ambient. Ports situated along the length of the column were sampled to determine the mercury vapor concentration in the air after known contact times with the adsorbent.

This procedure was repeated with $H_2O$ saturated air replacing the dry air. The $H_2O$ saturated air stream had been passed through the column for 16 hours before analysis was performed.

Both of the above procedures were repeated with sulfur impregnated GRC-II (15 percent w/w sulfur, impregnated at 150°C followed by heating at 150°C for 90 minutes) replacing the sulfur impregnated coconut char described above.

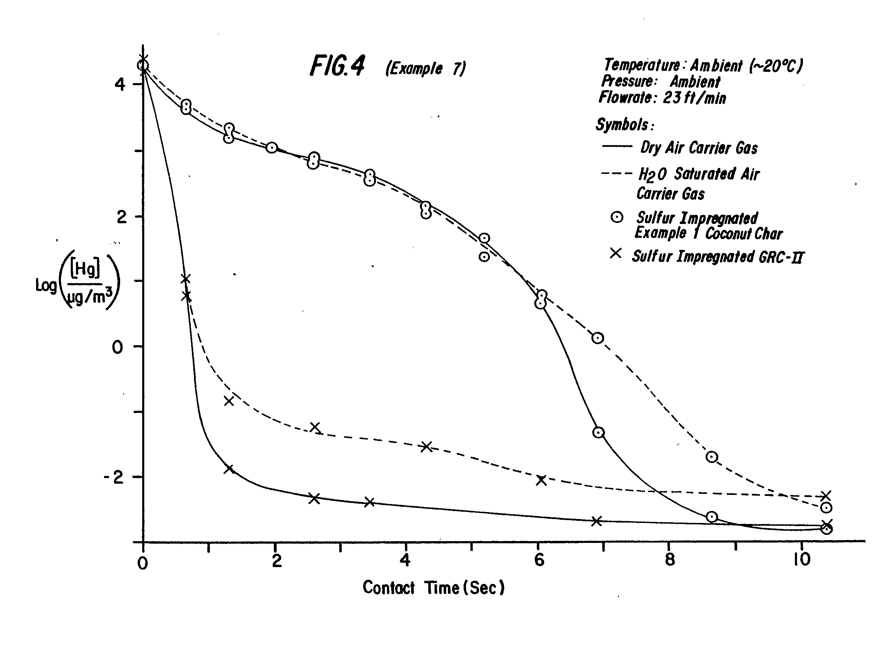

GRC-II is an activated coconut shell-based carbon. As expected, the mercury vapor removal limit is the same for both carbons (Figure 4) for dry adsorber beds.

As may be seen in Figure 4, the mercury vapor removal limit of the sulfur impregnated GRC-II is affected by adsorbed $H_2O$, while that of the sulfur impregnated coconut char is less severely affected due to its pore size being so constricted as to inhibit easy adsorption of $H_2O$.

Example 8

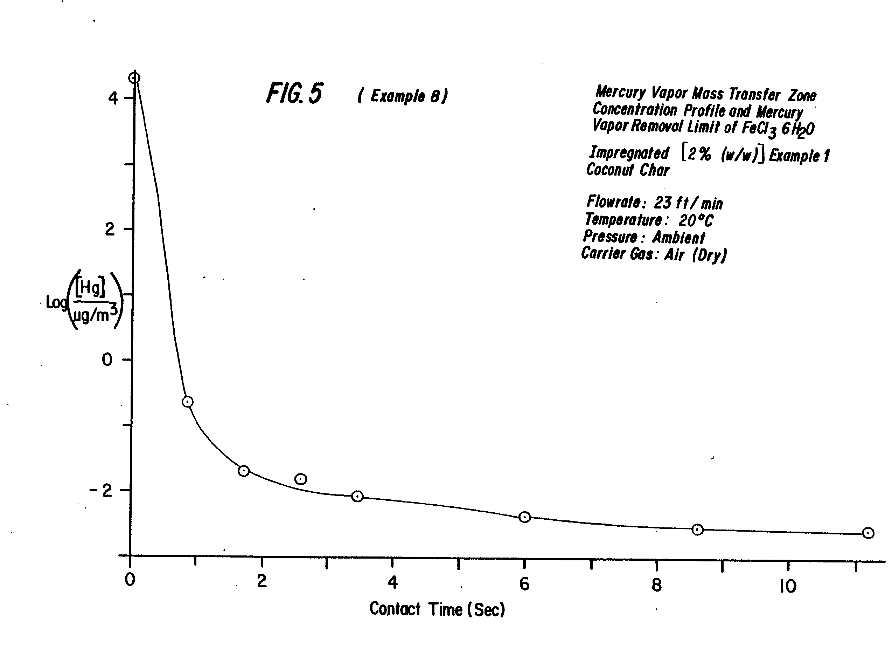

The carbon of Example 1 was sprayed with an aqueous solution of ferric chloride (14 g of $FeCl_3 \cdot 6H_2O$, 100 ml of $H_2O$, 700 g CMX-1). The resulting damp carbon was air dried several days. The impregnated carbon was placed in a column through which mercury vapor saturated air was passed at 20°C. Ports situated along the length of the column were sampled to determine the mercury vapor concentration in the air after known contact times with the adsorbent. The linear flow rate of the air was 23 ft/min. Results are presented in Figure 5.

Example 9

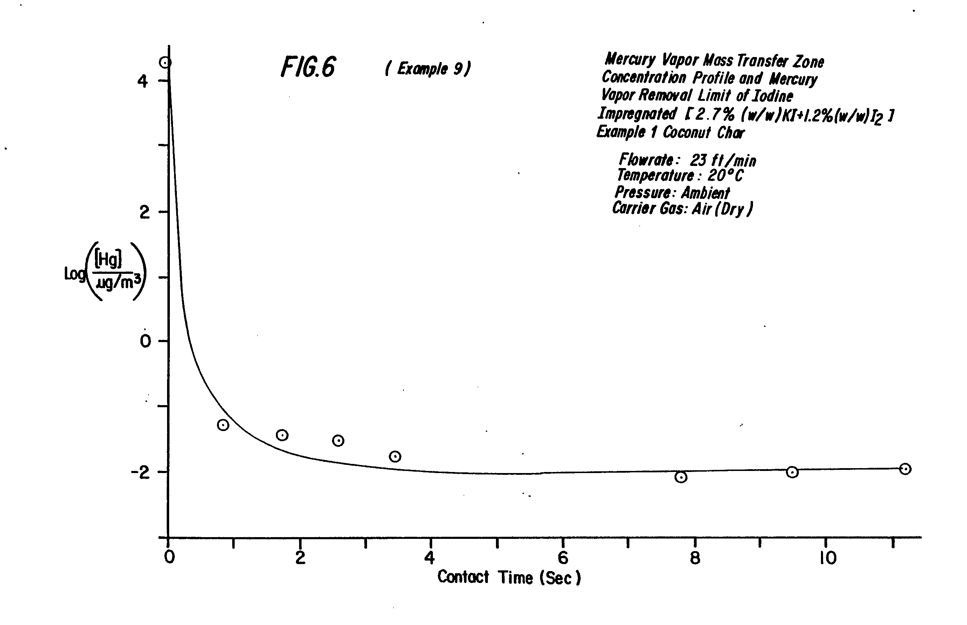

The carbon of Example 1 was sprayed with an aqueous solution of potassium triiodide (19.0 g KI, 8.5 g $I_2$, 300 cc $H_2O$, 700 g CMX-1). The resulting damp carbon was air dried several days. The impregnated carbon was placed in a column through which mercury vapor saturated air was passed at 20°C. Ports situated along the length of the column were sampled to determine the mercury vapor concentration in the air after known contact times with the adsorbent. The linear flow rate of the air was 23 ft/min. Results are presented in Figure 6.

Example 10

Calcined babassu nut char (10×30 mesh, calcined at 950°C) was mixed at 150°C with a sufficient quantity of sublimed elemental sulfur to provide a 5 percent (w/w) sulfur loading until the mixture was uniform. This mixture was then heated at 150°C for 90 minutes.

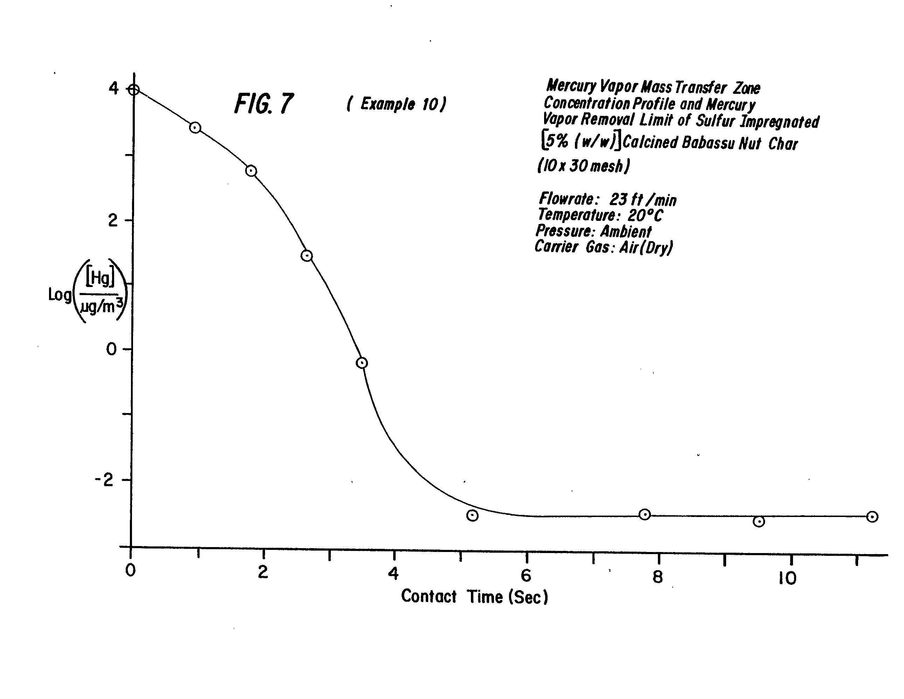

Dry air, having a high mercury vapor concentration, was passed through the sulfur impregnated calcined babassu nut char at 20°C and ambient pressure. Ports situated along the length of the column were sampled to determine the mercury vapor concentration in the air after known contact times with the adsorbent. The linear flow rate of the air was 23 ft/min. Results (Figure 7) show the mercury vapor removal limit of the sulfur impregnated MSC-V to be 0.004 µg/m$^3$.

Example 11 (Comparison Example)

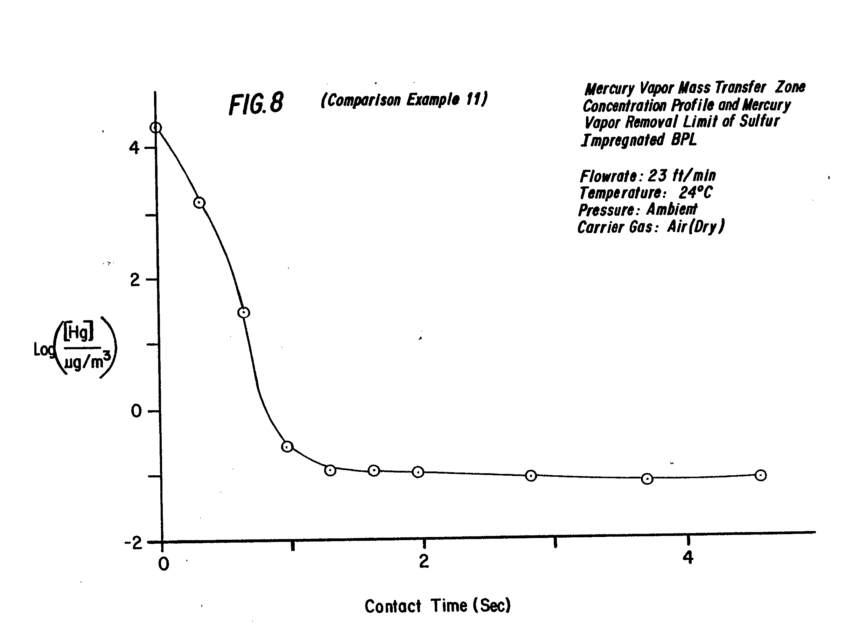

Dry air, having a high mercury vapor concentration, was passed through BPL, a coal-based activated carbon, [impregnated with 15 percent (w/w) sulfur, manufactured by Calgon Carbon Corporation, Pittsburgh, Pennsylvania] at 24°C and ambient pressure. Ports situated along the length of the column were sampled to determine the mercury vapor concentration in the air after known contact times with the adsorbent. The linear flow rate of the air was 23 ft/min. Results (Figure 8) show the mercury vapor removal limit of BPL to be 0.071 µg/m$^3$ under these conditions.

The carbons used in Examples 12 through 24 are shown in Table II.

TABLE II

| Carbon | Hg Vapor removal limit (µg/m³) 20—25°C ambient pressure | Nitrogen diffusivity ($\times 10^{-8}$ cm²/second) |
|---|---|---|
| BPL[*a] | .071 | 2786 |
| Bergbau[b] | .025 | 2.14 |
| CMX-1[a] | .0016 | 59.3 |
| MSC-V[a] | .004 | 2527 |
| GRC-II[a] | .0018 | 2200 |
| Babassu nut | .0040 | 170 |

[*] Comparison (not a molecular sieve).
[a] Manufactured by Calgon Carbon Corporation.
[b] Manufactured by Bergbau Forshung.

Examples

Example 12

The carbon molecular sieve of Example 1 was mixed, at 150°C, with a sufficient quantity of sublimed elemental sulfur to provide a 5 percent (w/w) sulfur loading until the mixture was uniform. This mixture was then heated at 150°C for 90 minutes.

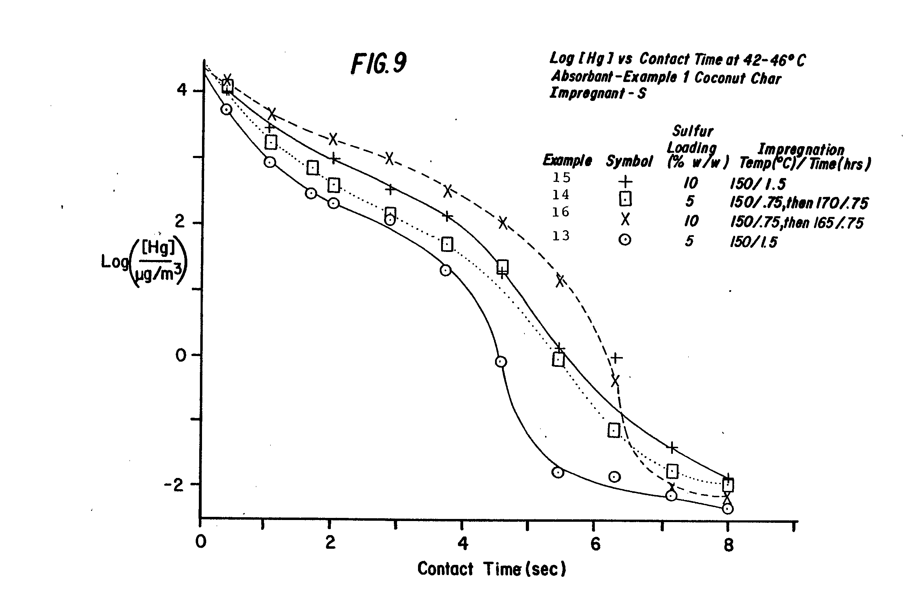

A dry air stream, having an inlet mercury concentration of 17,900 µg/m³ was passed through a column containing the above-described sulfur impregnated CMX-1, at a linear velocity of 23 ft/min. The column and inlet air stream were maintained at a temperature of 42°C and ambient pressure. A contact time of 8 seconds was sufficient to reduce the mercury vapor concentration to .005 µg/m³. The results are presented in Figure 9.

Example 13

The carbon molecular sieve of Example 1 was mixed, at 150°C, with a sufficient quantity of sublimed elemental sulfur to provide a 5 percent (w/w) sulfur loading until the mixture was uniform. This mixture was then heated at 150°C for 45 minutes and at 170°C for an additional 45 minutes.

A dry air stream, having an inlet mercury concentration of 30,800 µg/m³ was passed through a column containing the above-described sulfur impregnated CMX-1, at a linear velocity of 23 ft/min. The column and inlet air stream were maintained at a temperature of 46°C and ambient pressure. A contact time of 8 seconds was sufficient to reduce the mercury vapor concentration to .012 µg/m³. The results are presented in Figure 9.

Example 14

The carbon molecular sieve of Example 1 was mixed, at 150°C, with a sufficient quantity of sublimed elemental sulfur to provide a 10 percent (w/w) sulfur loading until the mixture was uniform. This mixture was then heated at 150°C for 90 minutes.

A dry air stream, having an inlet mercury concentration of 22,700 µg/m³ was passed through a column containing the above-described sulfur impregnated CMX-1, at a linear velocity of 23 ft/min. The column and inlet air stream were maintained at a temperature of 44°C and ambient pressure. A contact time of 8 seconds was sufficient to reduce the mercury vapor concentration to .014 µg/m³. The results are presented in Figure 9.

Example 15

The carbon molecular sieve of Example 1 was mixed, at 150°C, with a sufficient quantity of sublimed elemental sulfur to provide a 10 percent (w/w) sulfur loading until the mixture was uniform. This mixture was then heated at 150°C for 45 minutes and at 165°C for an additional 45 minutes.

A dry air stream, having an inlet mercury concentration of 21,200 µg/m³ was passed through a column containing the sulfur impregnated coconut char, at a linear velocity of 23 ft/min. The column and inlet air stream were maintained at a temperature of 44°C and ambient pressure. A contact time of 8 seconds was sufficient to reduce the mercury vapor concentration to .008 µg/m³. The results are presented in Figure 9.

Example 16

Dry air, having a high mercury vapor concentration, was passed through the carbon molecular sieve of Example 1 impregnated with sulfur (5 percent sulfur loading, impregnated at 150°C for 90 minutes heating time) at ambient pressure and temperatures of 20°C and 42°C. Ports situated along the length of the column were sampled to determine the mercury vapor concentration in the air after known contact times with the adsorbent. The linear flowrate of the air was 23 ft/min.

The above procedure was repeated at 18°C and 42°C with the sulfur impregnated carbon molecular sieve of Example 1 being replaced with Union Carbide 1/16 mole sieve (a sulfur impregnated zeolite mercury adsorbent).

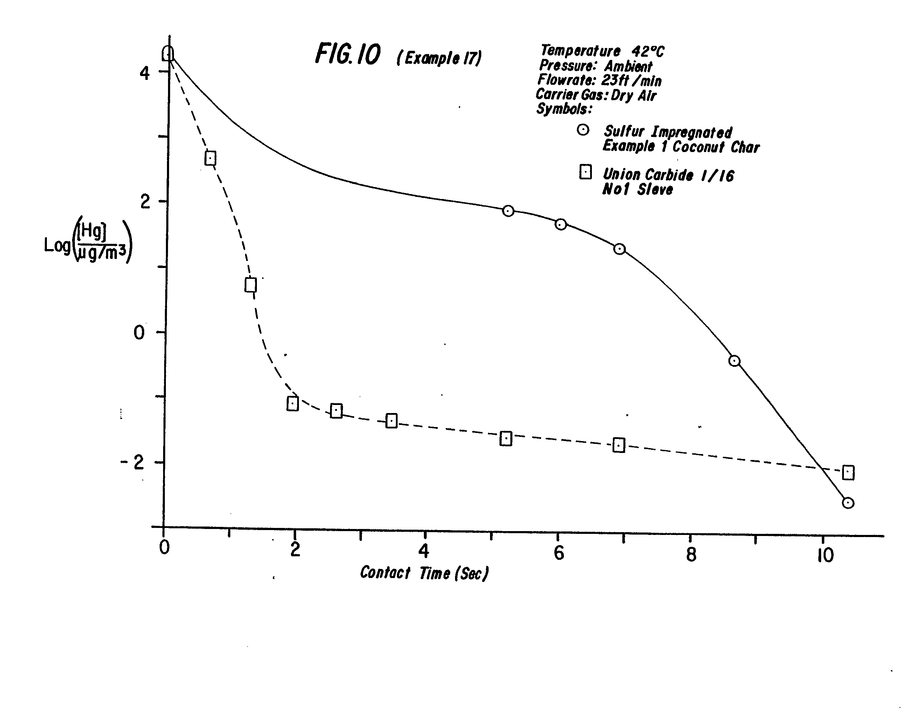

Results (Figure 10) obtained at 42°C show the mercury vapor removal limit of the sulfur impregnated zeolite (0.008 µg/m³) to be inferior to that of the sulfur impregnated Example 1 carbon (.003 µg/m³). It should also be noted that the removal limit of the carbon molecular sieve does not appear to be highly dependent on the mercury partial pressure.

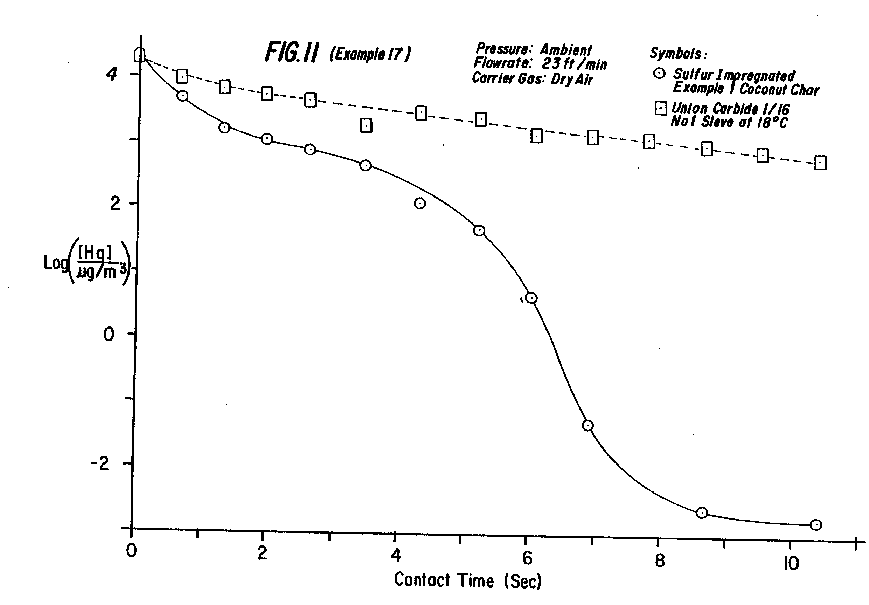

Results (Figure 11) obtained at lower temperatures (18 and 20°C) show the Union Carbide mole sieve (at 18°C) to be ineffective due to very poor mercury vapor removal kinetics. The sulfur impregnated coconut char has a mercury vapor removal limit of <.002 µg/m³ at a nearly equivalent temperature (20°C).

Example 17

Dry air, having a high mercury vapor concentration, was passed through a column containing the carbon molecular sieve of Example 1 impregnated with sulfur (5 percent sulfur loading, impregnated at 150°C, followed by heating at 150°C for 90 minutes) at a linear flowrate of 23 ft/min. Pressure and temperature were ambient. Ports situated along the length of the column were sampled to determine the mercury vapor concentration in the air after known contact times with the adsorbent.

This procedure was repeated with $H_2O$ saturated air replacing the dry air. The $H_2O$ saturated air stream had been passed through the column for 16 hours before analysis was performed.

Both of the above procedures were repeated with sulfur impregnated GRC-II (15 percent w/w sulfur, impregnated at 150°C followed by heating at 150°C for 90 minutes) replacing the sulfur impregnated coconut char described above.

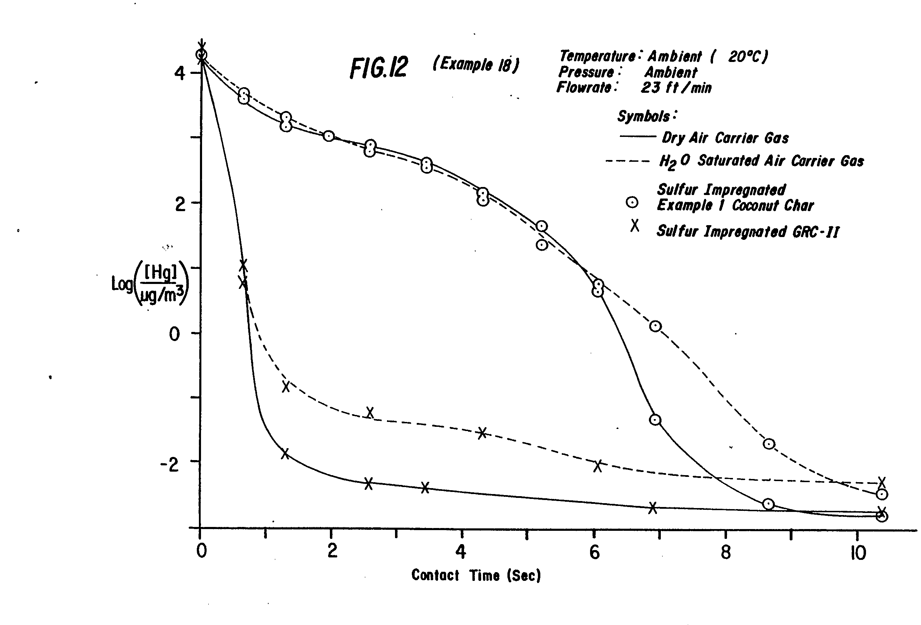

GRC-II is a coconut shell-based carbon. GRC-II is an activated carbon. As expected, the mercury vapor removal limit is the same for both carbons (Figure 12) for dry adsorber beds.

As may be seen in Figure 12, the mercury vapor removal limit of the sulfur impregnated GRC-II is severely affected by adsorbed $H_2O$, while that of the sulfur impregnated coconut char is less severaly affected due to its pore size being so constricted as to inhibit easy adsorption of $H_2O$.

Example 18

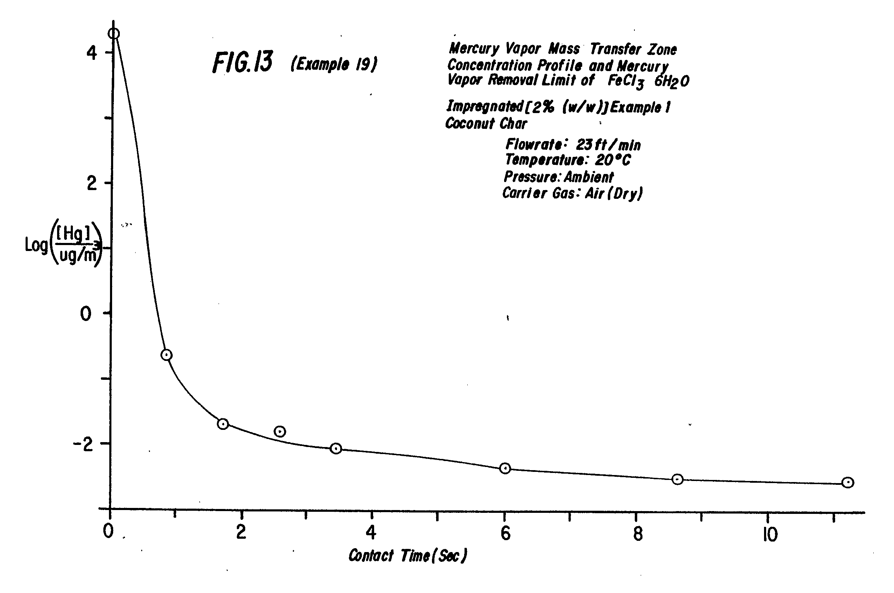

The carbon molecular sieve of Example 1 was sprayed with an aqueous solution of ferric chloride (14 g of $FeCl_3 \cdot 6H_2O$, 100 ml of $H_2O$, 700 g CMX-1). The resulting damp carbon was air dried several days. The impregnated carbon was placed in a column through which mercury vapor saturated air was passed at 20°C. Ports situated along the length of the column were sampled to determine the mercury vapor concentration in the air after known contact times with the adsorbent. The linear flow rate of the air was 23 ft/min. Results are presented in Figure 13.

Example 19

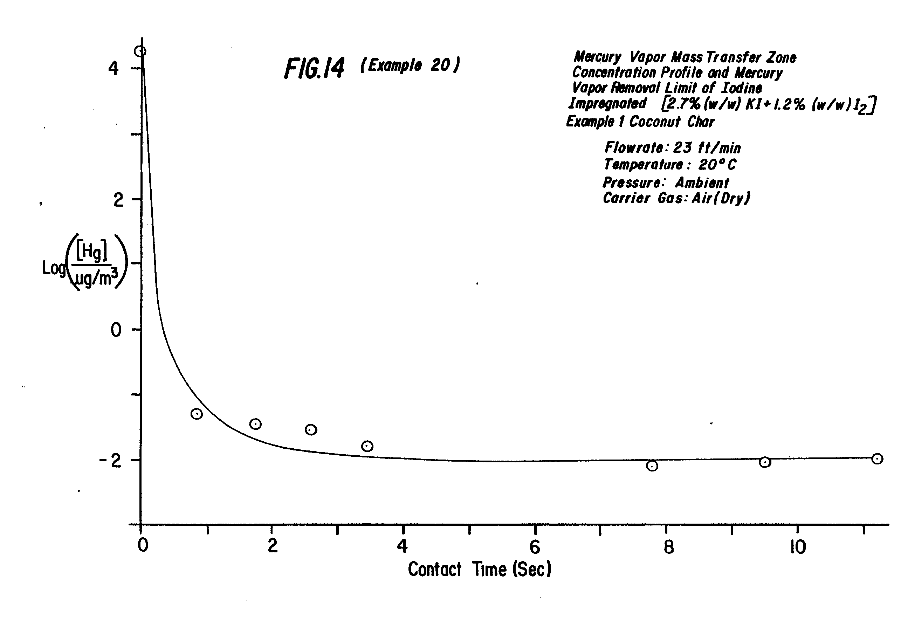

The carbon molecular sieve of Example 1 was sprayed with an aqueous solution of potassium triiodide (19.0 g KI, 8.5 g $I_2$, 300 cc $H_2O$, 700 g CMX-1). The resulting damp carbon was air dried several days. The impregnated carbon was placed in a column through which mercury vapor saturated air was passed at 20°C. Ports situated along the length of the column were sampled to determine the mercury vapor concentration in the air after known contact times with the adsorbent. The linear flow rate of the air was 23 ft/min. Results are presented in Figure 14.

Example 20

MSC-V (a commercial slightly-activated, coal-based, molecular sieve carbon, manufactured by Calgon Carbon Corporation, Pittsburgh, Pennsylvania) was mixed at 150°C with a sufficient quantity of sublimed elemental sulfur to provide a 5 percent (w/w) sulfur loading until the mixture was uniform. This mixture was then heated at 150°C for 90 minutes.

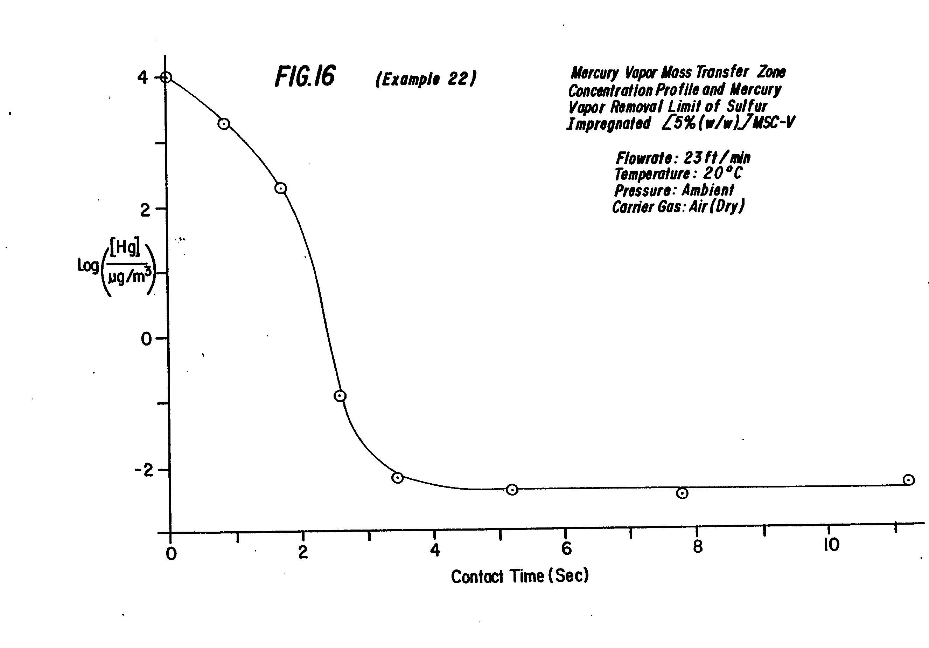

Dry air, having a high mercury vapor concentration, was passed through the sulfur impregnated MSC-V at 20°C and ambient pressure. Ports situated along the length of the column were sampled to determine the mercury vapor concentration in the air after known contact times with the adsorbent. The linear flow rate of the air was 23 ft/min. Results (Figure 16) show the mercury vapor removal limit of the sulfur impregnated MSC-V to be 0.004 µg/m³.

Example 21

Bergbau molecular sieve, a coal-based carbon molecular sieve (manufactured by Bergbau Forshung), was mixed at 150°C with a sufficient quantity of sublimed elemental sulfur to provide a 5 percent (w/w) sulfur loading until the mixture was uniform. This mixture was then heated at 150°C for 90 minutes.

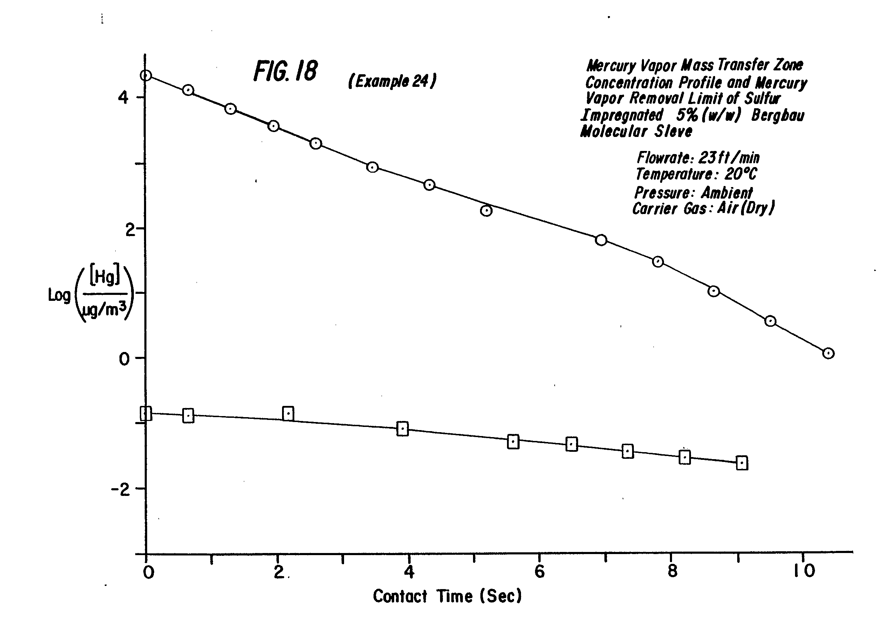

Dry air, having a high mercury vapor concentration, was passed through the sulfur impregnated Bergbau molecular sieve at 20°C and ambient pressure. Ports situated along the length of the column were sampled to determine the mercury vapor concentration in the air after known contact times with the adsorbent. The linear flow rate of the air was 23 ft/min. Results (Figure 18, upper line) show the mercury vapor removal kinetics of this sulfur impregnated carbon to be extremely slow. A mercury vapor removal limit was not reached within the column length. When the inlet mercury vapor concentration was reduced (Figure 18, lower line) the mercury vapor removal kinetics were further slowed. A mercury vapor removal limit appears to be reached at valued slightly less than .025 µg/m³ for any particle contact time.

**Claims**

1. A carbon molecular sieve originating from nut shell having a nitrogen diffusivity in the range from 1 to 2600 . $10^{-8}$ cm²/second prior to impregnation and which is impregnated with from about 0.005 to about 15 percent, by weight, of sulfur.

2. A carbon molecular sieve according to claim 1, characterized in that it has a nitrogen diffusivity in the range from 10 to 300 . $10^{-8}$ cm²/second.

3. A carbon molecular sieve, characterized in that its nitrogen diffusivity is between 1 and $2600 \times 10^{-8}$ cm²/second, and which is impregnated with from about 0.005 to about 15 percent, by weight, of a mercy reactive material.

4. A process for removing mercury vapor from gas streams characterized in that it comprises the step consisting of passing a gas stream containing mercury vapor into contact with a nut shell carbon according to one of the claims 1 to 2.

5. A process for removing mercury vapor for gas streams characterized in that it comprises the step consisting of passing a gas stream containing mercury vapor into contact with a carbon molecular sieve according to claim 3.

6. A process according to claim 4 to 5, characterized in that prior to the said step b) it comprises the step a) consisting of contacting the gas stream with:

an activated coal-based carbon impregnated with a mercury reactive material, or

a zeolite molecular sieve impregnated with a mercury reactive material.

7. A process for removing mercury vapor from gas streams which comprises the step consisting of passing a gas stream containing mercury vapor into contact with a carbon molecular sieve, according to claim 3.

8. A process according to claim 4 to 7, characterized by the fact that the initial mercury vapor level P at a given pressure and temperature is at a concentration defined as P is below $5.5 \times 10^{-6} \times P_s$ where $P_s$ is the mercury vapor saturation pressure at said given pressure and temperature.

**Patentansprüche**

1. Kohlenstoffmolekularsieb auf Basis von Nußschalen-Kohlenstoff mit einer Stickstoff-Diffusionsfähigkeit im Bereich von 1 bis $2600 \times 10^{-8}$ cm²/Sekunde vor der Imprägnierung, welches mit etwa 0,005 bis etwa 15 Gew.-% Schwefel imprägniert ist.

2. Kohlenstoffmolekularsieb nach Anspruch 1, dadurch gekennzeichnet, daß der Nußschalenkohlenstoff eine Stickstoff-Diffusionsfähigkeit im Bereich von 10 bis $300 \times 10^{-8}$ cm²/Sekunde vor der Imprägnierung besitzt.

3. Kohlenstoffmolekularsieb, dadurch gekennzeichnet, daß seine Stickstoff-Diffusionsfähigkeit zwischen 1 und $2600 \times 10^{-8}$ cm²/Sekunde beträgt und daß es mit etwa 0,005 bis etwa 15 Gew.-% eines gegenüber Quecksilber reaktiven Materials imprägniert ist.

4. Verfahren zur Entfernung von Quecksilberdampf aus Gasströmen, dadurch gekennzeichnet, daß es die Stufe b) umfaßt, welche darin besteht, daß Quecksilberdampf in Kontakt mit einem Molekularsieb auf der Basis von Nußschalenkohlenstoff gemäß einem der Ansprüche 1 bis 2 gehalten wird.

5. Verfahren zur Entfernung von Quecksilberdampf aus Gasströmen, umfassend die Stufe b), die darin besteht, einen Quecksilberdampf enthaltenden Gasstrom dem Kontakt mit einem Kohlenstoffmolekularsieb nach Anspruch 3 zuzuführen.

6. Verfahren nach Anspruch 4 oder 5, dadurch gekennzeichnet, daß es vor der Stufe b) die Stufe a) umfaßt, welche darin besteht, den Gasstrom in Kontakt zu bringen mit:

einem Kohlenstoff auf Basis von Aktivkohle, der mit einem gegenüber Quecksilber reaktiven Material imprägniert ist, oder

einem Zeolit-Molekularsieb, das mit einem gegenüber Quecksilber reaktiven Material imprägniert ist.

7. Verfahren nach den Ansprüchen 4 bis 6, dadurch gekennzeichnet, daß der anfängliche Quecksilberdampf-Partialdruck P geringer is als $(5,5 \times 10^{-6}) \times P_s$, worin $P_s$ der Quecksilberdampf-Sättigungsdruck bei einem gegebenen Druck und gegebener Temperatur ist.

**Revendications**

1. Tamis moléculaire de carbone à base de charbon actif de coco ayant une diffusivité d'azote comprise entre 1 et 2600 . $10^{-8}$ cm²/seconde avant imprégnation, et qui est imprégné d'environ 0,005 à environ 15 pour cents, en poids de soufre.

2. Tamis moléculaire de carbone à base de charbon actif de coco selon la revendication 1, caractérisé en ce qu'il a une diffusivité d'azote comprise entre 10 et 300 . $10^{-8}$ cm²/seconde avant l'imprégnation.

3. Tamis moléculaire de carbone, caractérisé en ce qu'il a une diffusivité d'azote comprise entre 1 et $2600 \times 10^{-8}$ cm²/second, et qui est imprégné avec d'environ 0,005 à environ 15 pourcents, en poids, d'un matériau réactif au mercure.

4. Procédé pour retenir la vapeur de mercure dans les courants gazeux caractérisé en ce qu'il comprend l'étape b) qui consiste à mettre en contact la vapeur contenant le mercure avec un tamis moléculaire à base de charbon actif de coco, selon l'une des revendications 1 à 2.

5. Procédé pour retenir la vapeur de mercure présente dans les courants gazeux qui comprend l'étape b) qui consiste à faire passer un courant gazeux contenant de la vapeur de mercure au contact d'un tamis moléculaire de carbone, selon la revendication 3.

6. Procédé selon les revendications 4 et 5, caractérisé en ce qu'avant l'étape b) il comprend l'étape a) qui consiste à mettre en contact le courant de gaz avec:

un charbon actif à base de carbone imprégné d'un matériau réagissant avec le mercure, ou

un tamis moléculaire zéolite imprégné avec un matériau réagissant au mercure.

7. Procédé selon les revendications 4 à 6, caractérisé en ce que la pression partielle initiale de mercure P est inférieure à $(5,5 \times 10^{-6}) \times P_s$, où $P_s$ est la pression de vapeur saturante du mercure à une pression et température données.

FIG.1

Log [Hg] vs Contact Time at 42-46°C
Absorbent - Example 1 Coconut Char
Impregnant - S

| Example | Symbol | Sulfur Loading (% w/w) | Impregnation Temp. (°C) / Time (hrs) |
|---|---|---|---|
| 4 | + | 10 | 150 / 1.5 |
| 3 | □ | 5 | 150/.75, then 170/.75 |
| 5 | X | 10 | 150/.75 then 165/.75 |
| 2 | ⊙ | 5 | 150/1.5 |

$Log\left(\dfrac{[Hg]}{\mu g/m^3}\right)$

Contact Time (sec)

EP 0 145 539 B1

FIG.2    (Example 6)

Temperature: 42°C
Pressure: Ambient
Flowrate: 23 ft/min
Carrier Gas: Dry Air

Symbols:

⊙  Sulfur Impregnated
Example 1 Coconut Char

▢  Union Carbide 1/16
No1 Sieve

Y-axis: $Log\left(\dfrac{[Hg]}{\mu g/m^3}\right)$

X-axis: Contact Time (Sec)

EP 0 145 539 B1

FIG. 3    (Example 6)

Pressure: Ambient
Flowrate: 23 ft/min
Carrier Gas: Dry Air

Symbols:
⊙ Sulfur Impregnated
   Example 1 Coconut Char

☐ Union Carbide 1/16
   No 1 Sieve at 18°C

$Log\left(\dfrac{[Hg]}{\mu g/m^3}\right)$

Contact Time (Sec)

EP 0 145 539 B1

FIG.4 (Example 7)

Temperature: Ambient (~20°C)
Pressure: Ambient
Flowrate: 23 ft/min

Symbols:

——— Dry Air Carrier Gas

--- H₂O Saturated Air
    Carrier Gas

⊙ Sulfur Impregnated
   Example 1 Coconut Char

✕ Sulfur Impregnated GRC-II

$Log\left(\dfrac{[Hg]}{\mu g/m^3}\right)$

Contact Time (Sec)

FIG. 5    ( Example 8 )

Mercury Vapor Mass Transfer Zone
Concentration Profile and Mercury
Vapor Removal Limit of $FeCl_3\ 6H_2O$

Impregnated $[2\%\ (w/w)]$ Example 1
Coconut Char

Flowrate: 23 ft/min
Temperature: 20°C
Pressure: Ambient
Carrier Gas: Air (Dry)

EP 0 145 539 B1

FIG.6     ( Example 9 )

Mercury Vapor Mass Transfer Zone
Concentration Profile and Mercury
Vapor Removal Limit of Iodine
Impregnated $[2.7\% (w/w)KI+1.2\%(w/w)I_2]$
Example 1 Coconut Char

Flowrate: 23 ft/min
Temperature: 20°C
Pressure: Ambient
Carrier Gas: Air (Dry)

EP 0 145 539 B1

FIG. 7 ( Example 10 )

Mercury Vapor Mass Transfer Zone
Concentration Profile and Mercury
Vapor Removal Limit of Sulfur Impregnated
[5% (w/w)]Calcined Babassu Nut Char
(10 x 30 mesh)

Flowrate: 23 ft /min
Temperature: 20°C
Pressure: Ambient
Carrier Gas: Air(Dry)

EP 0 145 539 B1

FIG. 8 *(Comparison Example 11)*

*Mercury Vapor Mass Transfer Zone Concentration Profile and Mercury Vapor Removal Limit of Sulfur Impregnated BPL*

*Flowrate: 23 ft/min*
*Temperature: 24°C*
*Pressure: Ambient*
*Carrier Gas: Air(Dry)*

$$\text{Log}\left(\frac{[\text{Hg}]}{\mu g/m^3}\right)$$

Contact Time (Sec)

EP 0 145 539 B1

FIG.9

Log [Hg] vs Contact Time at 42-46°C
Absorbant-Example 1 Coconut Char
Impregnant - S

| Example | Symbol | Sulfur Loading (% w/w) | Impregnation Temp(°C)/ Time(hrs) |
|---------|--------|------------------------|-----------------------------------|
| 15 | + | 10 | 150/ 1.5 |
| 14 | ▫ | 5 | 150/.75,then 170/.75 |
| 16 | X | 10 | 150/.75,then 165/.75 |
| 13 | ⊙ | 5 | 150/1.5 |

EP 0 145 539 B1

**FIG. 10** (Example 17)

Temperature: 42°C
Pressure: Ambient
Flowrate: 23ft/min
Carrier Gas: Dry Air
Symbols:

⊙ Sulfur Impregnated Example 1 Coconut Char

☐ Union Carbide 1/16 No1 Sieve

$Log\left(\frac{[Hg]}{\mu g/m^3}\right)$

Contact Time (Sec)

FIG.11 (Example 17)

Pressure: Ambient
Flowrate: 23 ft/min
Carrier Gas: Dry Air

Symbols:
⊙ Sulfur Impregnated Example 1 Coconut Char
☐ Union Carbide 1/16 No1 Slave at 18°C

Log ([Hg] / μg/m³)

Contact Time (Sec)

FIG.12  (Example 18)

Temperature: Ambient ( 20°C)
Pressure:  Ambient
Flowrate:  23 ft /min

Symbols:
——— Dry Air Carrier Gas
----- $H_2O$ Saturated Air Carrier Gas

⊙  Sulfur Impregnated
   Example 1 Coconut Char
X  Sulfur Impregnated GRC-II

$Log\left(\dfrac{[Hg]}{\mu g/m^3}\right)$

Contact Time (Sec)

EP 0 145 539 B1

FIG.13 (Example 19)

Mercury Vapor Mass Transfer Zone
Concentration Profile and Mercury
Vapor Removal Limit of FeCl$_3$ 6H$_2$O

Impregnated [2% (w/w)] Example I
Coconut Char

Flowrate: 23 ft/min
Temperature: 20°C
Pressure: Ambient
Carrier Gas: Air (Dry)

Contact Time (Sec)

EP 0 145 539 B1

FIG.14 (Example 20)

Mercury Vapor Mass Transfer Zone
Concentration Profile and Mercury
Vapor Removal Limit of Iodine
Impregnated [2.7% (w/w) KI + 1.2% (w/w)$I_2$]
Example 1 Coconut Char

Flowrate: 23 ft/min
Temperature: 20°C
Pressure: Ambient
Carrier Gas: Air(Dry)

$Log\left(\frac{[Hg]}{\mu g/m^3}\right)$

Contact Time (Sec)

EP 0 145 539 B1

FIG.16    (Example 22)

Mercury Vapor Mass Transfer Zone
Concentration Profile and Mercury
Vapor Removal Limit of Sulfur
Impregnated ∠5%(w/w)⌐MSC-V

Flowrate: 23 ft/min
Temperature: 20°C
Pressure: Ambient
Carrier Gas: Air (Dry)

Contact Time (Sec)

$Log\left(\frac{[Hg]}{\mu g/m^3}\right)$

EP 0 145 539 B1

FIG. 18    (Example 24)

Mercury Vapor Mass Transfer Zone
Concentration Profile and Mercury
Vapor Removal Limit of Sulfur
Impregnated   5% (w/w)  Bergbau
Molecular Sieve

Flowrate: 23 ft/min
Temperature: 20°C
Pressure: Ambient
Carrier Gas: Air (Dry)

$Log\left(\dfrac{[Hg]}{\mu g/m^3}\right)$

Contact Time (Sec)

EP 0 145 539 B1